Europäisches Patentamt

European Patent Office

Office européen des brevets

(11) Veröffentlichungsnummer: **0 258 846**

**A2**

(12) **EUROPÄISCHE PATENTANMELDUNG**

(21) Anmeldenummer: 87112583.7

(51) Int. Cl.⁴: **F16C 19/30**

(22) Anmeldetag: 28.08.87

(30) Priorität: 28.08.86 DE 3629173

(43) Veröffentlichungstag der Anmeldung:
09.03.88 Patentblatt 88/10

(84) Benannte Vertragsstaaten:
AT BE CH DE ES FR GB GR IT LI LU NL SE

(71) Anmelder: MASCHINENFABRIK HORST KABUS GMBH
Industriestr. 16
D-7085 Bopfingen(DE)

(72) Erfinder: Herrmann, Alfons
Häselstrasse 61
D-7952 Bad Buchenau(DE)
Erfinder: Kajerski, Monika
Fahrbachstrasse 147
D-7080 Aalen(DE)

(74) Vertreter: Seibert, Rudolf, Dipl.-Ing. et al
Tattenbachstrasse 9
D-8000 München 22(DE)

(54) **Kreuzrollenlager.**

(57) Die Erfindung bezieht sich auf ein Kreuzrollenlager, dessen Laufringe je eine etwa v-förmige angeordnete Nut zur direkten oder indirekten Aufnahme der gekreuzt und käfiggeführten Zylinderrollen aufweisen.

Die Erfindung besteht darin, daß die Schenkel der ringförmigen Nut der Laufringe oder die Schenkel eines eingesetzten Laufbahnbandes länger sind, als die an ihnen abrollende Mantelfläche der Zylinderrollen. Vorzugsweise stellt die Projektion auf die Zylinderrollen ein Rechteck dar, dessen kürzere Seite die abrollende Mantelfläche ist.

Vorteilhaft ist es ferner, wenn ein Laufbahnband aus einem auf ca. 90 Grad winklig biegbares Band mit v-förmigem Querschnitt aus gehärtetem Material zwischen Zylinderrollen und Nuten eingesetzt ist.

EP 0 258 846 A2

## Kreuzrollenlager

Die Erfindung bezieht sich auf ein Kreuzrollenlager, dessen Laufringe eine etwa v-förmige Nut zur direkten oder indirekten, also über ein eingelegtes Laufbahnband oder Laufdrähte, Aufnahme der gekreuzten und käfiggeführten und gehaltenen Zylinderrollen aufweist.

Bei den bisher bekannten Kreuzrollenlagern besteht gegenüber den Vier-Punkt-Lagern der große Nachteil, daß bisher die Stirnflächen der Zylinderrollen an den Laufringen beziehungsweise einem eingelegten Band als Lauffläche anliegen und damit eine unerwünschte Reibung und deshalb starke Erwärmung hervorrufen, die nicht nur die Leichtgängigkeit des Lagers beeinträchtigen, sondern auch die Drehwiderstände negativ beeinflussen und erhebliche Lagergeräusche verursachen. Auch verkanten die Zylinderrollen insbesonders bei horizontaler Drehachse sehr oft, wenn nicht besondere Maßnahmen dagegen getroffen werden. Diese Nachteile des Kreuzrollenlagers sind schon lange bekannt, so daß immer wieder versucht wurde, sie abzustellen.

So wird durch die DE-OS 31 20 265 ein Kreuzrollenlager offenbart, bei welchem die Zylinderrollen an den Enden mit einer Fase versehen sind, was einerseits fertigungstechnisch aufwendig ist und andererseits sowohl ein Verkannten der Zylinderrollen wie Reibungsverluste nicht mit Sicherheit verhindern kann.

Im Gebrauchsmuster G 85 32 126.5 ist ein anderer Weg offenbart, um solche Lager verbessern zu können. In ihm wird vorgeschlagen, den Winkel zwischen den gekreuzten Zylinderrollen, der normalerweise 90 Grad beträgt, zu vergrößern, etwa auf über 100 Grad; zusätzlich dazu werden die Zylinderrollen an ihren Kanten abgefast. Dieser Weg führt aber ebenfalls nicht dazu, die an den Stirnflächen auftretende Reibung zu beseitigen, wie dieser Veröffentlichung auf Seite 6 sehr deutlich zu entnehmen ist. Im übrigen ist nicht ersichtlich, welchen Vorteil die Vergrößerung des Winkels mit sich bringt, doch zeigt dies, wie sehr die Fachwelt bemüht ist, solche Lager zu verbessern.

Die Erfindung hat sich zur Aufgabe gestellt, ein Kreuzrollenlager zu konzipieren, das alle diese Nachteile vermeidet, bei dem also die Zylinderrollen mit ihren Stirnflächen nirgends anstoßen können und Verkantungen mut absoluter Sicherheit verhindert.

Sie erreicht dies dadurch, daß die Schenkel der v-förmigen Nut der Laufringe oder des eingelegten Laufbahnbands länger sind als die ablaufende Mantelfläche der käfiggeführten Zylinderrollen, so daß die Zylinderrollen mit ihren Stirnflächen von dem Winkel, den die Laufringschenkel miteinander bilden, so weit entfernt in den Nuten liegen, daß sie nicht gegen den jeweils anderen V-Schenkel anstoßen können.

Dieses neue Kreuzrollenlager brmgt dadurch. zaß die Zylinderrollen mit ihren Stirnflächen nicht gegen deren Lager anliegen, eine ganze Reihe von Vorteilen. Die Drehwiderstände sind niedrig und vor allem gleichmäßig; die Umfangsgeschwindigkeiten können höher liegen als bei den bekannten Lagern, die Lagergeräusche liegen dennoch niedriger, die Erwärmung des Lagers wird geringer und - schließlich sinkt der Verschleiß durch die nicht mehr vorhandene Stirnflächenreibung des Lagers, so daß dessen Lebensdauer höher ist als bei den bekannten Lagern dieser Art.

Dadurch wird die Projektion auf die Zylinderrollen zu einem Rechteck, dessen kürzere Seite die Lauffläche der Zylinderrollen bildet. Durch diese Maßnahme wird über den größeren Durchmesser der Zylinderrollen eine höhere Traglast (Tragfähigkeit) bei gleicher Raumgröße erreicht.

Diese Vorteile können in mehr oder weniger hohem Maße mit bekannten Laufbahnen, also gehärteten Laufringen oder Bandeinlagen als Laufbahn in nicht gehärteten Laufringen, bzw. mit bekannten Käfigen, die eine sichere Halterung der Zylinderrollen und eine entsprechend gute Wälzkörperführung aufweisen, erhöht werden. Das Optimum eines Kreuzrollenlagers wird aber durch zusätzliche Elemente erzielt, welche die vorgenannten Vorteile verstärken, besonders einfach herzustellen sind und das Lager wesentlich verbilligen.

Zum einen ist es besonders günstig, wenn als Lauffläche ein Laufband gemäß den Ansprüchen 4 bis 6 eingesetzt wird, weil damit eine satte Auflage des Laufbandes auf den Nuten und ein besonders ruhiger Lauf der Zylinderrollen gewährleistet wird. Das Käfigband nach den Anspüchen 7 und 8 erlaubt die Einlage der Zylinderrollen vor dessen Montage in gestrektem Zustand des Käfigbandes und dessen Biegen in die Kreisform in einfacher Weise. Die zusätzlich in den Ansprüchen 4 bis 8 beschriebenen Merkmale sind zwar bei dem neuen Kreuzrollenlager besonders vorteilhaft, sie können aber auch bei üblichen Lagern dieser Art mit Vorteilen verwirklicht werden.

Diese und weitere Merkmale der Erfindung gehen aus den Ansprüchen, den Zeichnungen und den folgenden Erläuterungen her vor, dabei zeigen:

Fig. 1 einen Schnitt durch ein ringförmiges Kreuzrollenlager

Fig. 2 das Laufbahnband in gestrecktem Zustand,

Fig. 3 einen Ausschnitt aus Fig. 1 nach Einlegen des Laufbahnbandes vor der Montage des Lagers

Fig. 4 das gestückte Käfigband und

Fig. 5 den Federeffekt des Laufbahnbandes

Das ringförmige Kreuzrollenlager besteht grundsätzlich aus dem äußeren Laufring 1, 10, dem inneren Laufring 2 und den Kreuzrollen 3, 30. Der innere Laufring nimmt im allgemeinen die nicht dargestellte Last auf, die über die bei 21 angedeutete Schraubenverbindung mit dem Laufring 2 verbunden wird. Die Schraubverbindung 13 dient der Verbindung beider Laufringteile 1, 10 miteinander und dient gleichzeitig der Verbindung zur Basis.

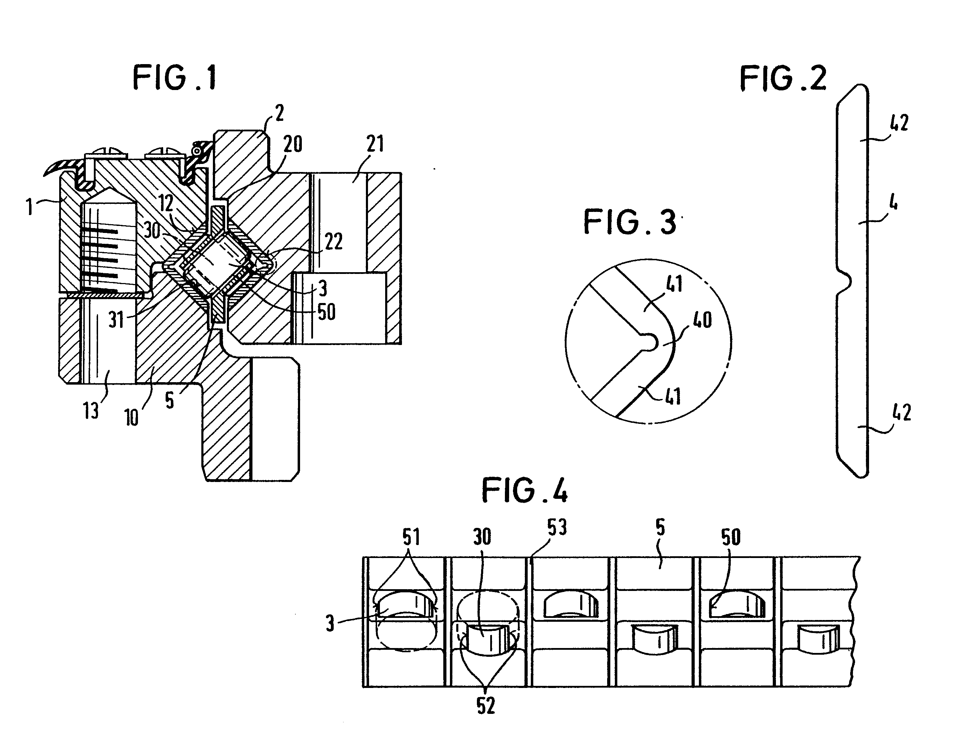

Beide Laufringe 1 und 10 einerseits und 2 andererseits weisen je eine Nut 12 bzw. 22 auf, die entweder direkt oder indirekt über das Laufbahnband 4 die Laufbahn der Zylinderrollen 3, 30 bilden. Diese Zylinderrollen weisen eine rechteckige Projektion auf, d.h., die Länge der Laufflächen 31 ist kürzer als deren Durchmesser, so daß sie als Zylinderscheiben bezeichnet werden können. Der Fig. 1 ist zu entnehmen, daß diese Zylinderrollen 3, 30 mit ihren Stirnflächen frei liegen und mit dem Laufbahnband 4 in keinem Fall in Berührung kommen können, so daß deren Lauf frei von unerwünschter Reibung ist.

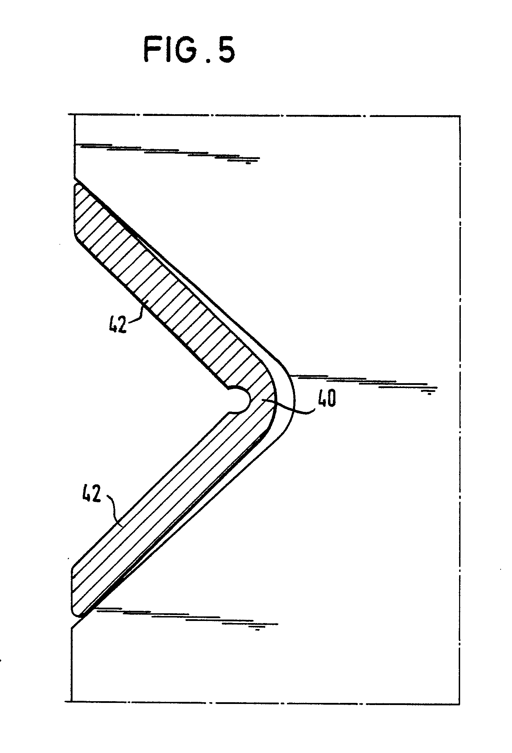

Das Laufbahnband 4 besteht aus einem gestreckten Band mit v-förmigem Querschnitt. In dessen Längenmitte 40 ist der Querschnitt so verdünnt, daß es um diese Stelle leicht biegbar ist. Dessen Ende 41 sind um ca. 45 Grad abgeschrägt, so daß diese mit der Kanten der Laufringe fluchten. Die Schenkel 41 werden vor dem Einlegen in die Nuten 12, 22 so weit zusammengebogen, daß sie einen von 90 Grad etwas abweichenden Winkel bilden. Damit wird erreicht, daß das Laufbahnband 4 bei der Montage plan gegen die Nuten gedrückt wird; dabei ist es vorzuziehen, diesen Winkel, wie es in Fig. 5 dargestellt ist, um ein Geringes größer als 90 Grad zu halten. ·

Das für dieses Lager am besten geeignete Käfigband besteht aus einem an sich bekannten endlosen Band 5 mit Öffnungen 50, in welche die unter 45 Grad zur Drehachse angeordneten Zylinderrollen 3, 30 kreuzweise unter 90 Grad eingedrückt werden können (Fig. 4). Bei 51 greift der Rand der Öffnung um ein Geringeres so über die Zylinderrollen 3, 30 über, daß diese unter Druck in die Öffnung 50 eingedrückt werden können und gegen Herausfallen geschützt sind. Bei 52 ist die Öffnung kleiner, so daß dort eine einwandfreie Wälzkörperführung vorhanden ist. Die Nuten 53 stellen eine Verdünnung des Querschnitts des Käfigbandes dar, so daß es bestückt biegbar ist. Andere Käfige und Laufbahnelemente, die bei diesem Kreuzrollenlager ebenfalls verwendet werden können, sind Stand der Technik, so daß sie nicht besonders beschrieben zu werden brauchen. Die Kombination des erfindungsgemäßen Kreuzrollenlagers mit dem offenbartem Käfig und Laufbahnband stellt ein besonders vorteilhaftes Gesamtlager dar.

Das neue Lager ist sowohl als Ring-wie Linearlager möglich.

Liste der Bezugszeichen

1 das eine Teil des äußeren Laufrings
10 das andere Teil des äußeren Laufrings
11 Schraubverbindung mit der Basis
12 Nut
13 Schraubverbindung für die beiden Laufringteile
2 der innere Laufring
20 Absatz des Laufrings für den Käfig
21 Schraubverbindung mit der drehbaren Last
22 Nut
3 Zylinderrollen der einen Reihe
30 Zylinderrollen der um ca. 90 Grad versetzten anderen Reihe
31 Lauffläche der Zylinderrollen
4 Laufbahnband
40 verdünnter Querschnitt
41 Enden des Laufbahnbandes
42 Schenkel des Laufbahnbandes
5 Käfigband
50 Aufnahmeöffnungen für die Zylinderrollen
51 Eindrückseite für die Zylinderrollen
52 Wälzkörperführung auf der Gegenseite
53 verdünnter Querschnitt

## Ansprüche

1. Kreuzrollenlager, dessen Laufringe eine etwa v-förmige Nut zur direkten oder indirekten Aufnahme der gekreuzt und käfiggeführten und gehaltenen Zylinderrollen aufweisen, dadurch gekennzeichnet, daß die Schenkel der v-förmigen Nut (12) der Laufringe (1, 10, 2) oder die Schenkel (41) eines eingelegten Laufbahnbandes (4) länger sind als die an ihnen ablaufenden Mantelflächen (31) der Zylinderrollen (3, 30).

2. Kreuzrollenlager nach Anspruch 1 dadurch gekennzeichnet, daß die Projektion auf die Zylinderrollen (3, 30) ein Rechteck darstellt, dessen kürzere Seite die abrollende Lauffläche (31) der Zylinderrollen (3, 30) ist.

3. Kreuzrollenlager nach Anspruch 1 oder 2, dadurch gekennzeinet, daß als Laufbahn für die Zylinderrollen (3, 30) ein in die Nuten (12, 22) der Laufringe (1, 10, 2) ein legbares Band (4) vorgesehen ist.

4. Kreuzrollenlager, insbesondere nach Anspruch 3, dadurch gekennzeichnet, daß das Laufbahnband (4) ein sich linear erstreckendes gehärtetes v-förmiges Teil ist, in dessen Längenmitte ein einschneidender dünnerer Querschnitt nach Art eines Filmscharniers (40) vorgesehen ist.

5. Kreuzrollenlager nach Anspruch 3 oder 4, dadurch gekennzeichnet, daß die Enden (41) des Laufbahnbandes (4) mit einem Winkel von ca. 45 Grad abgeschrägt sind.

6. Kreuzrollenlager nach einem oder mehreren der Ansprüche 3 bis 5 dadurch gekennzeichnet, daß die Schenkel (42) des Laufbahnbandes (4) vor dem Einlegen in die Nuten (12, 22) einen Winkel miteinander bilden, der etwas größer oder kleiner als 90 Grad ist.

7. Kreuzrollenlager mit einem aus einem endlosen Band gefertigten Käfig insbesonders nach einem oder mehreren der Ansprüche 1 bis 6, dadurch gekennzeichnet, daß der Käfig aus einem ringförmigen endlosen Band (5) besteht, dessen Aufnahmeöffnungen (50) beidseitig so unterschiedlich ausgebildet sind, daß die Zylinderrollen (3, 30) von der einen Seite (51) aus über einen Schnappeffekt eindrückbar sind und auf der Gegenseite (52) die Wälzkörperführung vorhanden ist.

8. Kreuzrollenlager nach Anspruch 7 dadurch gekennzeichnet, daß der Querschnitt des Käfigbandes (5) zwischen (51) den Aufnahmeöffnungen (50) verdünnt ist.

# FIG.1

# FIG.2

# FIG.3

# FIG.4

0 258 846

FIG . 5